# EUROPEAN PATENT SPECIFICATION

(11) **EP 3 070 889 B1**
(45) Date of publication and mention of the grant of the patent: **11.03.2020**
(21) Application number: 14861510.7
(22) Date of filing: 10.11.2014
(51) Int. Cl.: H04L 12/70, H04W 80/02, H04W 92/14

(54) **ACCESS NETWORK MANAGEMENT**
VERWALTUNG EINES ZUGANGSNETZWERKS
GESTION D'UN RÉSEAU-D'ACCÈS

(30) Priority: 15.11.2013 JP 2013236576
(43) Date of publication of application: 21.09.2016
(73) Proprietor: NEC Corporation, Tokyo 108-8001 (JP)
(72) Inventor: OGURA, Daisuke, Tokyo 108-8001 (JP)
(74) Representative: MacDougall, Alan John Shaw
(86) International application number: PCT/JP2014/005638
(87) International publication number: WO 2015/072129

(56) References cited:
- JP-A- 2012 134 616
- US-A1- 2009 003 337

## Description

### [Technical Field]

The present invention concerns the management of traffic routing on the basis of communication states signalled by access-network devices.

### [Background Art]

In Fig. 12 of patent literature 1, a network monitoring system in which a monitoring system obtains information managed by each of a plurality of monitoring target devices by using Link Layer Discovery Protocol (LLDP) is described.

The LLDP is a layer 2 protocol specified by IEEE (Institute of Electrical and Electronics Engineers) 802.1AB. In the LLDP, an LLDP frame which contains management information held by a node is transmitted and received between the nodes that are adjacent to each other (hereinafter, referred to as "adjacent node").

Each node notifies the adjacent node of the management information managed by the each node by transmitting the LLDP frame to the adjacent node. Further, the each node recognizes the management information managed by the adjacent node by using the LLDP frame received from the adjacent node.

### [Citation List]

### [Patent Literature]

[PTL 1] Japanese Patent Application Laid-Open No. 2012-134616

US 2009/003337 A1 discloses that element managers and processes retrieve information from a first packet switch. The information is derived from layer-two (data link layer) control packets relayed from a second packet switch to the first packet switch via a tunnel. The layer-two control packets conform to a layer-two control protocol. Based at least in part on the retrieved information, the element managers and processes determine that the tunnel is configured to relay layer-two control packets conforming to the layer-two control protocol despite a desired tunnel configuration specifying that the tunnel should not be configured to relay layer-two control packets conforming to the layer-two control protocol.

### [Summary of Invention]

### [Technical Problem]

The monitoring system described in patent literature 1 obtains the management information managed by the monitoring target device by using the LLDP.

For this reason, when the node exists between the monitoring system and the monitoring target device described in patent literature 1, a problem in which the monitoring system cannot obtain the management information from the monitoring target device by communication on layer 2 occurs.

The present invention provides a management device, a communication system, management methods, and a program, as set out in the appended claims.

A management device configured to manage an access network comprising a plurality of access-network devices according to the present invention includes: communication means for receiving a layer 2 message from an access-network device installed in the access network via a communication tunnel set between the management device and the access-network device, the layer 2 message including information indicating a communication state including a band usage amount of a line between the access-network device and another access-network device existing in the next hop of the access-network device, the information being managed by the access-network device; and management means for setting traffic routing and instructing each access network device to control the band with reference to the communication state of the access-network device.

Also disclosed is an access-network device installed in an access network managed by the management device, including: control means for setting the communication tunnel between the management device which manages the access network and the access-network device after the access-network device is installed in the access network; communication processing means for specifying the band usage amount of the line between the access-network device and another access-network device existing in a next hop of the access-network device; and communication means for transmitting the layer 2 message via the communication tunnel, the layer 2 message including information indicating the communication state including the band usage amount of the access-network device, the information being managed by the access-network device.

A communication system which includes an access-network device of a plurality of access-network devices installed in an access network and a management device configured to manage the access network according to the present invention, wherein the access-network device includes control means for setting a communication tunnel between the management device and the access-network device after the access-network device is installed in the access network; communication processing means for specifying a band usage amount of a line between the access-network device and another access-network device existing in the next hop of the access-network device; and first communication means for transmitting a layer 2 message via the communication tunnel, the layer 2 message including information indicating a communication state including the band usage amount of the access network device, the information being managed by the access-network device, and the management device includes second communication means for receiving the layer 2 message from the access-network device via the communication tunnel; and management means for setting traffic routing and instructing each access network device to control the band with reference to the communication state of the access-network device.

Also disclosed is an information provision method performed by an access-network device installed in an access network managed by the management device, including: setting the communication tunnel between the management device which manages the access-network and the access-network device after the access-network device is installed in the access network; specifying the band usage amount of the line between the access-network device and another access-network device existing in a next hop of the access-network device; and transmitting the layer 2 message via the communication tunnel, the layer 2 message including information indicating the communication state including the band usage amount of the access-network device, the information being managed by the access-network device.

A management method performed by a management device which manages an access network comprising a plurality of access-network devices according to the present invention, includes: receiving a layer 2 message from an access-network device installed in the access network via a communication tunnel set between the management device and the access-network device, the layer 2 message including information indicating a communication state including a band usage amount of a line between the access-network device and another access-network device existing in the next hop of the access-network device, the information being managed by the access-network device; and setting traffic routing and instructing each access-network device to control the band with reference to the communication state of the access-network device.

Also disclosed is a program that causes a programmable access-network device installed in an access network managed by the management device to perform a control procedure in which the communication tunnel is set between the management device which manages the access network and the access-network device after the access-network device is installed in the access network; a communication procedure in which the band usage amount of the line between the access-network device and another access-network device existing in a next hop of the access-network device is specified; and a transmission procedure in which the layer 2 message including information indicating the communication state including the band usage amount of the access network device is transmitted via the communication tunnel, the information being managed by the access-network device.

A program according to the present invention causes a programmable management device to perform a reception procedure in which a layer 2 message is received from an access-network device installed in an access network comprising a plurality of access-network devices via a communication tunnel set between the management device and the access-network device, the layer 2 message including information indicating a communication state including a band usage amount of a line between the access-network device and another access-network device existing in the next hop of the access-network device, the information being managed by the access network device; and a management procedure in which traffic routing is set and each access-network device is instructed to control the band with reference to the communication state of the access-network device.

### [Advantageous Effect of Invention]

According to the present invention, even when the node exists between the management device and the access-network device, the management device can obtain the management information managed by the access-network device.

### [Brief Description of Drawings]

[Fig. 1] Fig. 1 is a block diagram showing a communication system 100 according to a first exemplary embodiment of the present invention.
[Fig. 2] Fig. 2 is a block diagram showing a wireless base station eNB1.
[Fig. 3] Fig. 3 is a figure showing a switch SW1.
[Fig. 4] Fig. 4 is a figure showing a BRM 3.
[Fig. 5] Fig. 5 is a flowchart for explaining operation of a wireless base station eNB1.
[Fig. 6] Fig. 6 is a flowchart for explaining operation of a switch SW1.
[Fig. 7] Fig. 7 is a flowchart for explaining operation of a BRM 3.
[Fig. 8] Fig. 8 is a figure showing an example of information stored in a storage unit 62.
[Fig. 9] Fig. 9 is a block diagram showing an example of a communication system 100.
[Fig. 10A] Fig. 10A is a figure showing a wireless base station composed of a communication tunnel control unit 44 and an LLDP processing unit 45.
[Fig. 10B] Fig. 10B is a figure showing a switch composed of a communication tunnel control unit 53 and an LLDP processing unit 54.
[Fig. 11] Fig. 11 is a figure showing a management device composed of a management unit 63.
[Fig. 12] Fig. 12 is a figure showing a wireless base station eNB used in a second exemplary embodiment.
[Fig. 13] Fig. 13 is a figure showing a switch SW used in a second exemplary embodiment.
[Fig. 14] Fig. 14 is a figure showing an example of a storage unit 62 storing a result of a determination using a first threshold value to a third threshold value.
[Fig. 15] Fig. 15 is a figure showing an example of a format of an LLDP frame.

### [Description of Embodiments]

An exemplary embodiment of the present invention will be described below with reference to a drawing.

### (First exemplary embodiment)

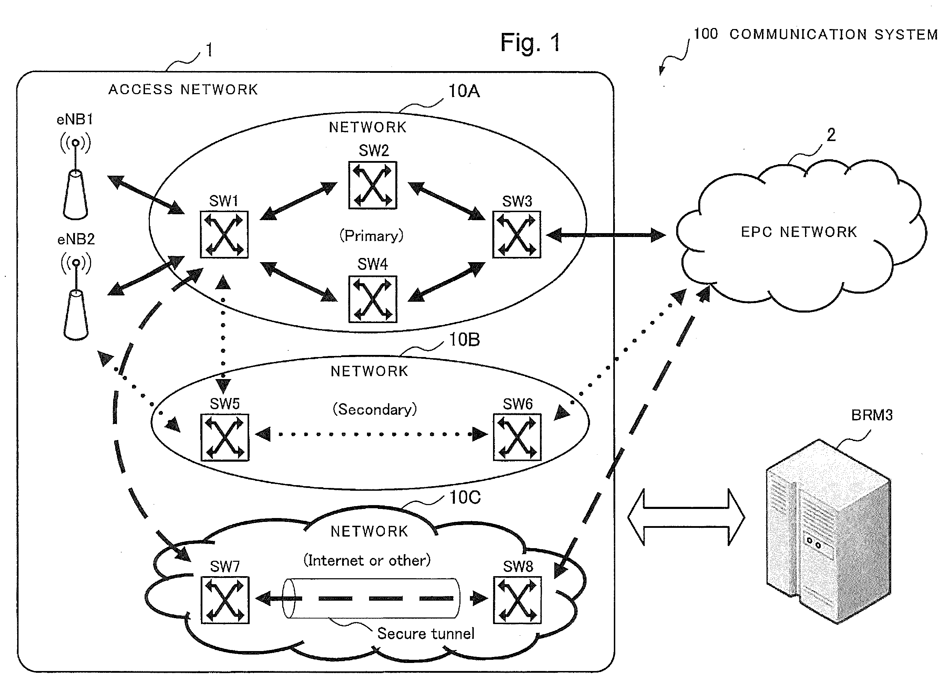

Fig. 1 is a block diagram showing a communication system 100 according to a first exemplary embodiment of the present invention.

The communication system 100 includes an access network 1, an EPC (Evolved Packet Core) network 2, and a management device 3. Hereinafter, the management device is also called a BRM (Backhaul Resource Manager).

The access network 1 includes wireless base stations eNB1 and eNB2 that are eNBs (evolved Node B) and networks 10A, 10B, and 10C.

Each of the networks 10A, 10B, and 10C connects between the wireless base stations eNB1 and eNB2 and the EPC network 2.

Each of the networks 10A, 10B, and 10C includes a plurality of switches and a plurality of routers. In Fig. 1, switches SW1 to SW4 are included in the network 10A, switches SW5 to SW6 are included in the network 10B, and switches SW7 to SW8 are included in the network 10C. Each of the switches SW1 to SW8 is for example, an L2 (layer 2) switch or an L3 (layer 3) switch.

The network 10A is connected to the wireless base stations eNB1 and eNB2 when the wireless base stations eNB1 and eNB2 are in a normal state.

The networks 10B and 10C are used as an alternative route when the network 10A is in a congestion state or in a failure state.

When the network 10B or the network 10C is a network for which security has to be taken into consideration, the network 10B or the network 10C may be used as the alternative route after a security tunnel is established to the network 10B or the network 10C. The Internet is one example of the network for which security has to be taken into consideration. However, the network for which security has to be taken into consideration is not limited to the Internet. An IPsec (Internet Protocol Security) tunnel is one example of the security tunnel. However, the security tunnel is not limited to the IPsec tunnel.

Each of the wireless base stations eNB1 and eNB2 and the switches SW1 to SW8 is one example of an access-network device or a second access-network device.

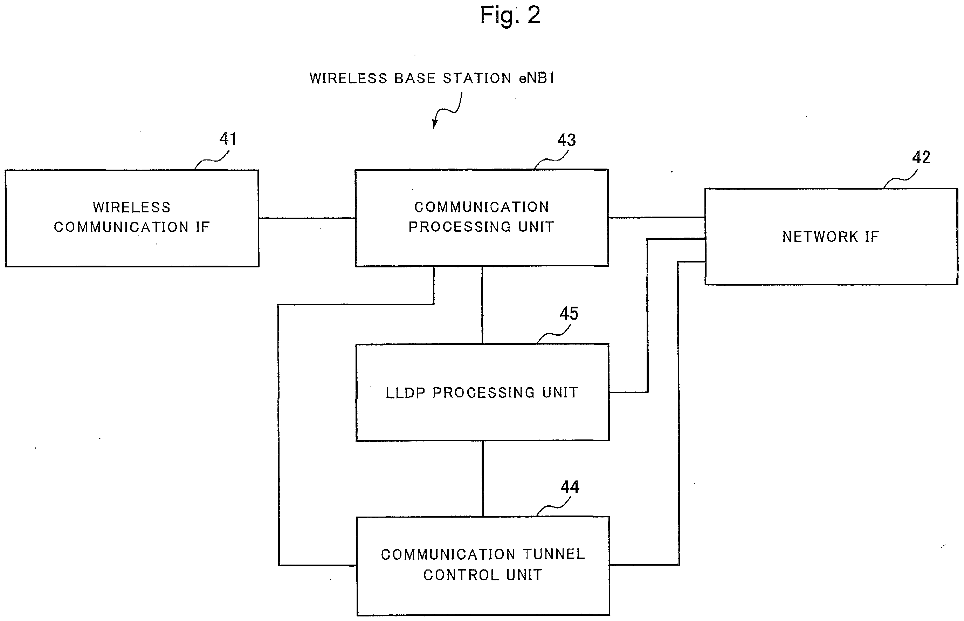

Fig. 2 is a block diagram showing the wireless base station eNB1.

In Fig. 2, the wireless base station eNB1 includes a wireless communication IF (interface) 41, a network IF 42, a communication processing unit 43, a communication tunnel control unit 44, and an LLDP processing unit 45.

The wireless communication IF 41 is connected to a terminal (not shown) such as a mobile phone, a smart phone, or the like by wireless.

The network IF 42 is connected to the access-network device (in an example shown in Fig. 1, the switch SW1) which directly communicates with the wireless base station eNB1.

The communication processing unit 43 performs a function of the common wireless base station (eNB). For example, the communication processing unit 43 controls the communication between the terminal wirelessly connected to the wireless communication IF 41 and the EPC network 2.

The communication tunnel control unit 44 is an example of a control unit.

The communication tunnel control unit 44 sets a communication tunnel (hereinafter, referred to as "a first communication tunnel") between the BRM 3 and the wireless base station eNB1 after the wireless base station eNB1 is installed in the access network 1.

The communication tunnel control unit 44 sets the first communication tunnel by using for example, a VLAN (Virtual Local Area Network) or a VRF (Virtual Routing and Forwarding).

The communication tunnel control unit 44 communicates with the BRM 3 and performs a setting process for setting the first communication tunnel. Further, because a method for setting the communication tunnel is a publicly known technique, the detailed description will be omitted.

The LLDP processing unit 45 is an example of a communication unit and a first communication unit.

The LLDP processing unit 45 generates the LLDP frame which contains information (hereinafter, referred to as "first management information") managed by the wireless base station eNB1. In this exemplary embodiment, the LLDP processing unit 45 manages the first management information. Hereinafter, the LLDP frame which contains the first management information is referred to as "a first LLDP frame".

The first management information is an example of the management information. The first management information includes identification information of the wireless base station eNB1 and information indicating a communication state of the wireless base station eNB1. The information indicating the communication state of the wireless base station eNB1 includes information indicating a current state of the wireless base station eNB1 among three states: a normal state, a congestion state, and a failure state and information of a band usage amount of a line between a node existing in the next hop of the wireless base station eNB1 and the wireless base station eNB1 in the access network 1.

The first LLDP frame is an example of a layer 2 message.

The LLDP processing unit 45 transmits the first LLDP frame via the first communication tunnel.

For example, the LLDP processing unit 45 performs the encapsulation of the first LLDP frame for the first communication tunnel and generates a packet for notification (hereinafter, referred to as "a packet for first notification").

The LLDP processing unit 45 transmits the packet for first notification via the first communication tunnel.

The wireless base station eNB2 has a function that is the same as that of the wireless base station eNB1. Therefore, the wireless base station eNB2 can be understood by replacing the word "wireless base station eNB1" with the word "wireless base station eNB2" in the above-mentioned description about the wireless base station eNB1.

Further, the network IF 42 in the wireless base station eNB2 is connected to the access-network devices (in an example shown in Fig. 1, the switches SW1 and SW5) which directly communicate with the wireless base station eNB2.

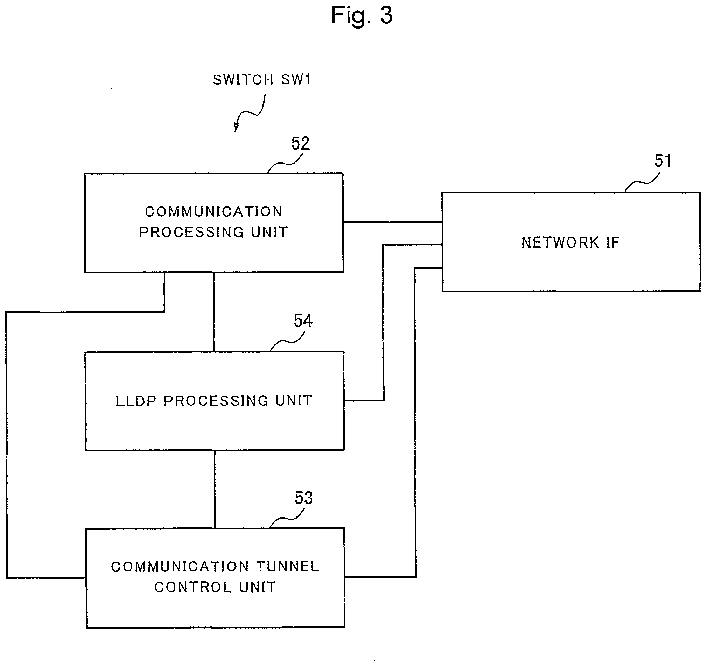

Fig. 3 is a figure showing the switch SW1.

In Fig. 3, the switch SW1 includes a network IF 51, a communication processing unit 52, a communication tunnel control unit 53, and an LLDP processing unit 54.

The network IF 51 is connected to the access-network devices (in an example shown in Fig. 1, the wireless base stations eNB1 and eNB2 and the switches SW2, SW4, SW5, and SW7) which directly communicate with the switch SW1.

The communication processing unit 52 has a switch function. For example, when the switch SW1 is the L2 switch, the communication processing unit 52 performs a function of the common L2 switch. Further, when the switch SW1 is an L3 switch, the communication processing unit 52 performs a function of the common L3 switch.

The communication tunnel control unit 53 is an example of the control unit.

The communication tunnel control unit 53 sets the communication tunnel (hereinafter, referred to as "a second communication tunnel") between the BRM 3 and the switch SW1 after the switch SW1 is installed in the access network 1. The communication tunnel control unit 53 sets the second communication tunnel by using for example, the VLAN or the VRF. As described above, because the method for setting the communication tunnel is a publicly known technique, the detailed description will be omitted.

The LLDP processing unit 45 is an example of the communication unit and the first communication unit.

The LLDP processing unit 54 generates the LLDP frame which contains information managed by the switch SW1 (hereinafter, referred to as "second management information"). In this exemplary embodiment, the LLDP processing unit 54 manages the second management information. Hereinafter, the LLDP frame which contains the second management information is referred to as "a second LLDP frame".

The second management information is an example of the management information. The second management information includes identification information of the switch SW1 and information indicating the communication state of the switch SW1. The information indicating the communication state of the switch SW1 includes information indicating a current state of the switch 1 among three states: a normal state, a congestion state, and a failure state and information of the band usage amount of the line between the node existing in the next hop of the switch SW1 and the switch SW1 in the access network 1.

The second LLDP frame is an example of the layer 2 message.

The LLDP processing unit 54 transmits the second LLDP frame via the second communication tunnel.

For example, the LLDP processing unit 54 performs the encapsulation of the second LLDP frame for the second communication tunnel and generates the packet for notification (hereinafter, referred to as "a packet for second notification"). The LLDP processing unit 54 transmits the packet for second notification via the second communication tunnel.

The description about each of the switches SW2 to SW8 can be obtained by replacing the word "switch SW1" with the word "switch SW2", "switch SW3", ..., or "switch SW8" in the above-mentioned description about the switch SW1.

Further, the network IF 51 in the switch SW2 is connected to the access-network device (in an example shown in Fig. 1, the switches SW1 and SW3) which directly communicates with the switch SW2.

Further, the network IF 51 in each of the switches SW3 to SW8 is connected to the access-network device which directly communicates with the each of the switches SW3 to SW8.

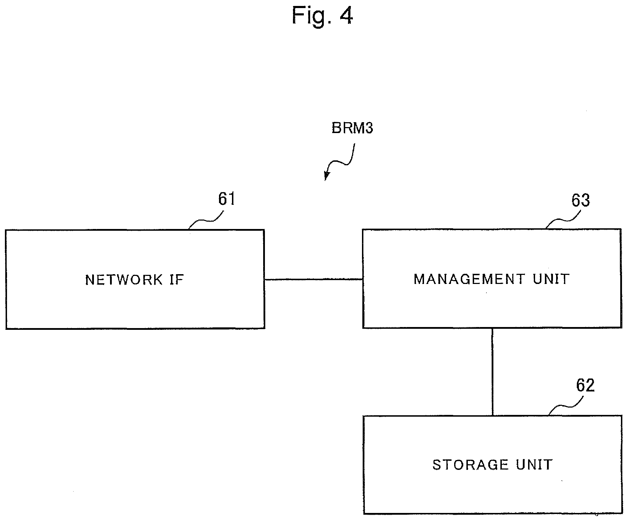

Fig. 4 is a figure showing the BRM 3.

In Fig. 4, the BRM 3 includes a network IF 61, a storage unit 62, and a management unit 63.

The network IF 61 is connected to the access-network device which directly communicates with the BRM 3.

The storage unit 62 stores the communication state of each of the devices (in an example shown in Fig. 1, the wireless base stations eNB1 and eNB2 and the switches SW1 to SW8) in the access network 1.

The management unit 63 is an example of the communication unit and a second communication unit.

The management unit 63 receives a packet for notification from each of the wireless base stations eNB1 and eNB2 and the switches SW1 to SW8 via each communication tunnel. The management unit 63 performs the decapsulation of each of the packets for notification and obtains each LLDP frame. The management unit 63 stores information indicating the communication state that is contained in the LLDP frame in the storage unit 62.

The management unit 63 controls the communication state of the access network 1 by using the communication state of each of the devices (the wireless base stations eNB1 and eNB2 and the switches SW1 to SW8) stored in the storage unit 62.

Next, operation will be described.

First, the operation of the wireless base station eNB1 will be described. Further, because the operation of the wireless base station eNB2 conforms to the operation of the wireless base station eNB1, the description will be omitted.

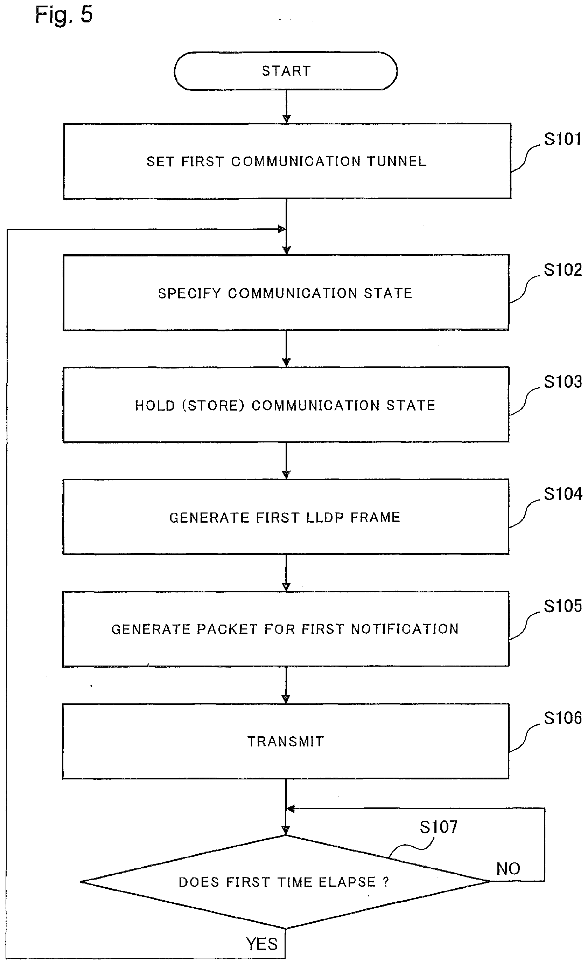

Fig. 5 is a flowchart for explaining the operation of the wireless base station eNB1.

After the wireless base station eNB1 is installed in the access network 1, the communication tunnel control unit 44 sets the first communication tunnel between the BRM 3 and the wireless base station eNB1 (step S101).

For example, when the power-supply voltage is supplied to the wireless base station eNB1 after the wireless base station eNB1 is installed in the access network 1, the communication tunnel control unit 44 sets the first communication tunnel between the BRM 3 and the wireless base station eNB1.

Next, the communication tunnel control unit 44 notifies the LLDP processing unit 45 of first communication tunnel information indicating an IP (Internet Protocol) addresses of the wireless base station eNB1 and the BRM 3 that are the end-point devices of the first communication tunnel. When the LLDP processing unit 45 receives the first communication tunnel information, the LLDP processing unit 45 holds the first communication tunnel information.

On the other hand, when the power-supply voltage is supplied to the wireless base station eNB1, the communication processing unit 43 performs the function of the common wireless base station (eNB) and specifies the communication state of the wireless base station eNB1 (step S102).

In this exemplary embodiment, the communication processing unit 43 specifies the band usage amount of the line between the node existing in the next hop of the wireless base station eNB1 and the wireless base station eNB1 by using an amount of the data transmitted and received between the communication processing unit 43 and the network IF 42 as the communication state of the wireless base station eNB1. Further, the data is the packet or the frame.

Further, the communication processing unit 43 specifies the current state of the wireless base station eNB1 among three states: the normal state, the congestion state, and the failure state by using the amount of the data transmitted and received between the communication processing unit 43 and the network IF 42 as the communication state of the wireless base station eNB 1.

Next, the communication processing unit 43 outputs the communication state of the wireless base station eNB1 to the LLDP processing unit 45.

When the LLDP processing unit 45 receives the communication state of the wireless base station eNB1, the LLDP processing unit 45 holds and manages the communication state of the wireless base station eNB1 (step S103).

Next, the LLDP processing unit 45 generates the first LLDP frame that contains the information indicating the communication state of the wireless base station eNB1 and the identification information of the wireless base station eNB1 (step S104).

Next, the LLDP processing unit 45 refers to the first communication tunnel information, performs the encapsulation of the first LLDP frame for the first communication tunnel, and generates the packet for first notification (step S105).

Here, the encapsulation for the first communication tunnel is a process of adding a header which indicates the IP address of the wireless base station eNB1 that is a transmission source and the IP address of the BRM 3 that is a transmission destination to the first LLDP frame.

Next, the LLDP processing unit 45 transmits the packet for first notification from the network IF 42 (step S106).

Because the packet for first notification is obtained by performing the encapsulation for the first communication tunnel, the packet for first notification can pass through the first communication tunnel and can be received by the BRM 3.

Next, the LLDP processing unit 45 waits until a first time set in advance elapses after transmitting the packet for first notification (step S107).

When the first time elapses after transmitting the packet for first notification, the LLDP processing unit 45 outputs an output instruction to the communication processing unit 43.

When the communication processing unit 43 receives the output instruction, the communication processing unit 43 performs a process of step S102.

Next, the operation of the switch SW1 will be described. Further, because the operation of the switches SW2 to SW8 conforms to the operation of the switch SW1, the description will be omitted.

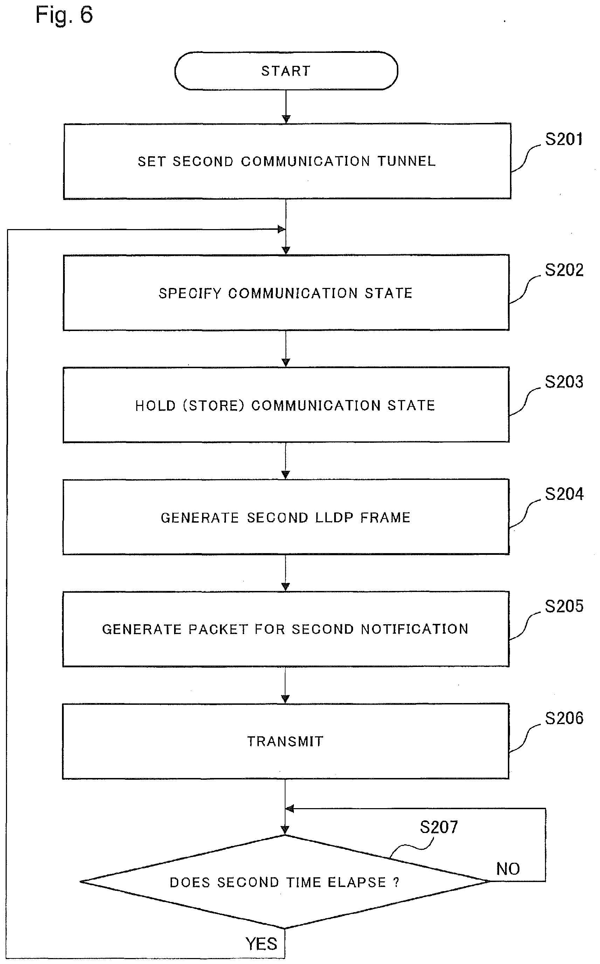

Fig. 6 is a flowchart for explaining the operation of the switch SW1.

When the power-supply voltage is supplied to the switch SW1 after the switch SW1 is installed in the access network 1, the communication tunnel control unit 53 sets the second communication tunnel between the BRM 3 and the switch SW1 (step S201).

Next, the communication tunnel control unit 53 notifies the LLDP processing unit 54 of second communication tunnel information indicating the IP addresses of the wireless base station eNB1 and the switch SW1 that are the end-point devices of the second communication tunnel. When the LLDP processing unit 54 receives the second communication tunnel information, the LLDP processing unit 54 holds the second communication tunnel information.

On the other hand, when the power-supply voltage is supplied to the switch SW1, the communication processing unit 52 performs the function of a common switch and further, specifies the communication state of the switch SW1 (step S202).

In this exemplary embodiment, the communication processing unit 52 specifies the band usage amount of the line between the node existing in the next hop of the switch SW1 and the switch SW1 by using an amount of the data transmitted and received between the communication processing unit 52 and the network IF 51 as the communication state of the switch SW1.

Further, the communication processing unit 52 specifies the current state of the switch SW1 among three states: the normal state, the congestion state, and the failure state by using the amount of the data transmitted and received between the communication processing unit 52 and the network IF 51 as the communication state of the switch SW1.

Next, the communication processing unit 52 outputs the communication state of the switch SW1 to the LLDP processing unit 54.

When the LLDP processing unit 54 receives the communication state of the switch SW1, the LLDP processing unit 54 holds and manages the communication state of the switch SW1 (step S203).

Next, the LLDP processing unit 54 generates the second LLDP frame that contains the information indicating the communication state of the switch SW1 and the identification information of the switch SW1 (step S204).

Next, the LLDP processing unit 54 refers to the second communication tunnel information, performs the encapsulation of the second LLDP frame for the second communication tunnel, and generates the packet for second notification (step S205).

Here, the encapsulation for the second communication tunnel is a process of adding a header which indicates the IP address of the switch SW1 that is the transmission source and the IP address of the BRM 3 that is the transmission destination to the second LLDP frame.

Next, the LLDP processing unit 54 transmits the packet for second notification from the network IF 51 (step S206).

Because the packet for second notification is obtained by performing the encapsulation for the second communication tunnel, the packet for second notification can pass through the second communication tunnel and can be received by the BRM 3.

Next, the LLDP processing unit 54 waits until a second time set in advance elapses after transmitting the packet for second notification (step S207). The second time may be equal to or different from the first time.

When the second time elapses after transmitting the packet for second notification, the LLDP processing unit 54 outputs an output instruction to the communication processing unit 52.

When the communication processing unit 52 receives the output instruction, the communication processing unit 52 performs a process of step S202.

Next, the operation of the BRM 3 will be described.

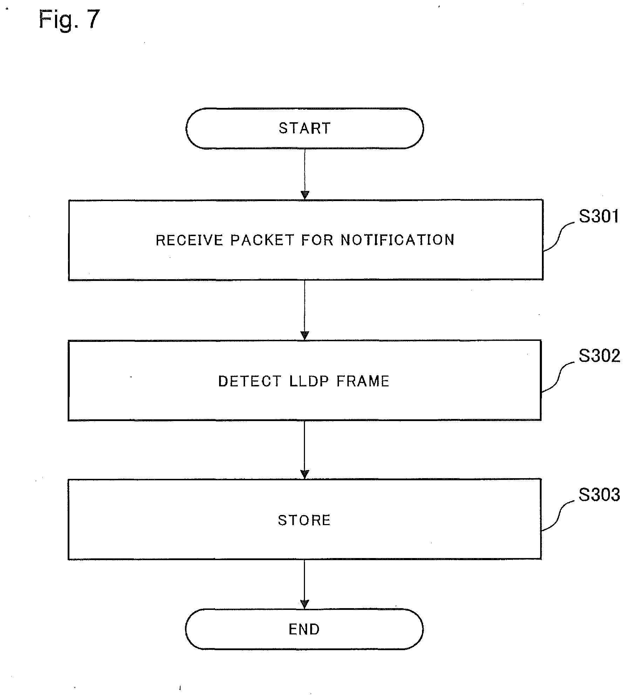

Fig. 7 is a flowchart for explaining the operation of the BRM 3.

When the management unit 63 receives the packet for first notification or the packet for second notification (hereinafter, referred to as "packet for notification") via the network IF 61 (step S301), the management unit 63 performs the decapsulation of the packet for notification and detects the LLDP frame (step S302).

Next, the management unit 63 associates the information indicating the communication state of the transmission source of the LLDP frame that is contained in the LLDP frame with the identification information of the transmission source and stores them in the storage unit 62 (step S303).

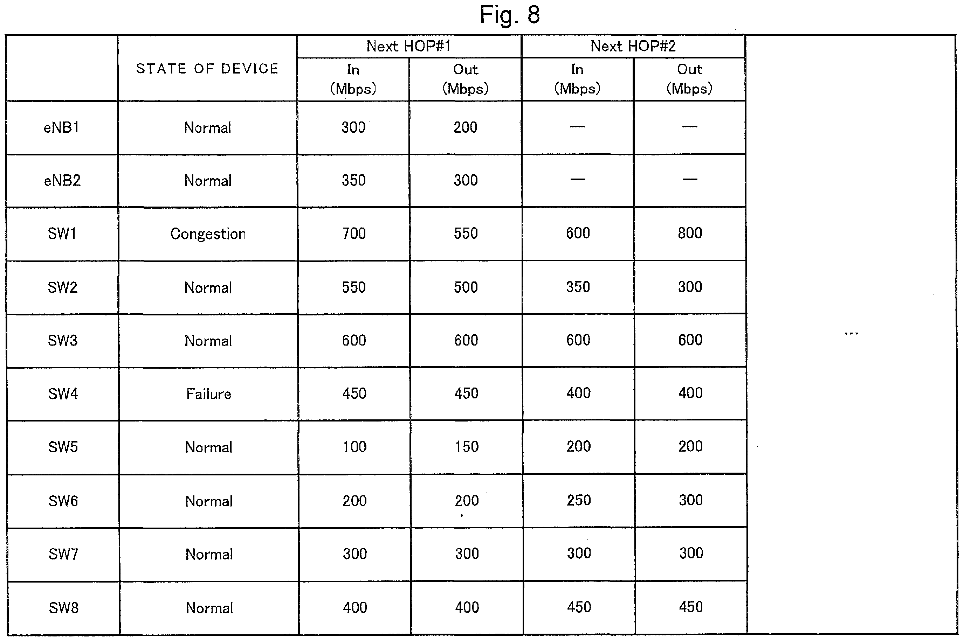

Fig. 8 is a figure showing an example of the information stored in the storage unit 62. In Fig. 8, "eNB1 to eNB2" and "SW1 to SW8" are shown as the identification information of each device.

The management unit 63 monitors the occurrence of congestion and the occurrence of the failure in the access network 1 by using the information stored in the storage unit 62.

Further, the management unit 63 instructs each of the devices (the wireless base stations and the switches) in the access network 1 to change routing information according to a congestion status or a failure status in the access network 1.

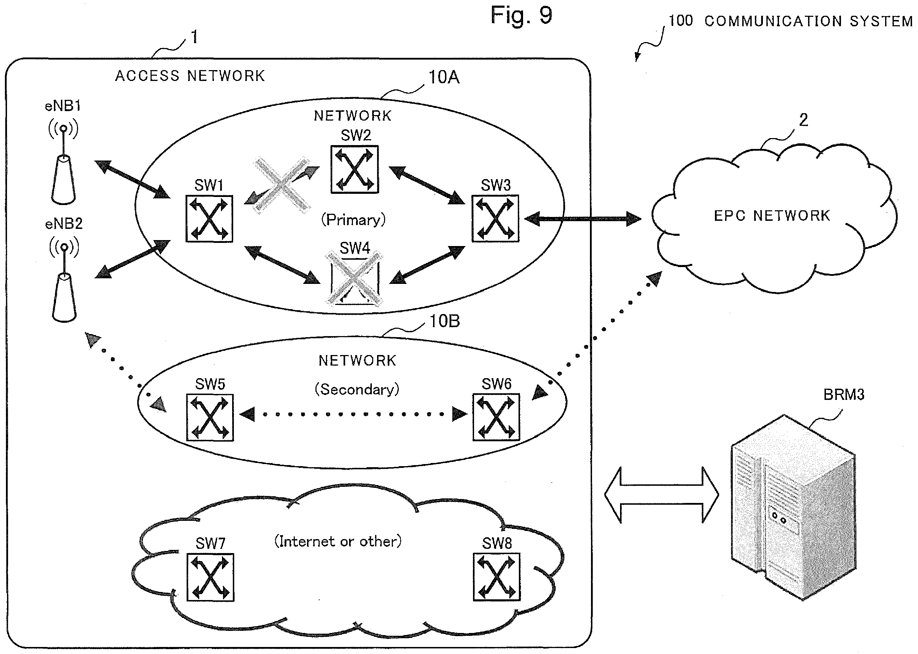

For example, as shown in Figs. 8 and 9, when the switch SW1 is in the congestion state and the switch SW4 is in the failure state, service quality is degraded by a packet loss or a delay in the access network 1. Therefore, in order to avoid the degradation of service quality due to the packet loss and the delay in the access network 1, the management unit 63 operates as follows.

The management unit 63 refers to the storage unit 62 and transmits an instruction to update the routing information by which the traffic of the wireless base station eNB2 is changed to the traffic of a switch SW#5 whose maximum band usage amount is not exceeded to the wireless base station eNB2.

In the wireless base station eNB2, the communication processing unit 43 changes the traffic of the wireless base station eNB2 to the traffic of the switch SW#5 according to the instruction to update the routing information received from the management unit 63.

Further, the management unit 63 may refer to the storage unit 62 and control the band of the wireless base station eNB1 connecting to only the switch SW1 (for example, a change of the transmission/reception band or a change of the band of a line for low-priority service).

Next, the effect of this exemplary embodiment will be described.

After the wireless base station eNB1 is installed in the access network 1, the communication tunnel control unit 44 sets the first communication tunnel between the BRM 3 and the wireless base station eNB1. The LLDP processing unit 45 transmits the first LLDP frame via the first communication tunnel.

For this reason, even when the node exists between the wireless base station eNB1 and the BRM 3, the first LLDP frame reaches the BRM 3.

Further, after the switch SW1 is installed in the access network 1, the communication tunnel control unit 53 sets the second communication tunnel between the BRM 3 and the switch SW1. The LLDP processing unit 54 transmits the second LLDP frame via the second communication tunnel.

For this reason, even when the node exists between the switch SW1 and the BRM 3, the second LLDP frame reaches the BRM 3.

The management unit 63 of the BRM 3 receives the first LLDP frame or the second LLDP frame via each communication tunnel.

Accordingly, even when the node exists between the BRM 3 and the access-network device (for example, the wireless base station eNB1 or the switch SW1), the BRM 3 can obtain the information managed by the access-network device from the LLDP frame.

The wireless base station composed of the communication tunnel control unit 44 and the LLDP processing unit 45, the switch composed of the communication tunnel control unit 53 and the LLDP processing unit 54, or the BRM composed of the management unit 63 also has the above-mentioned effect.

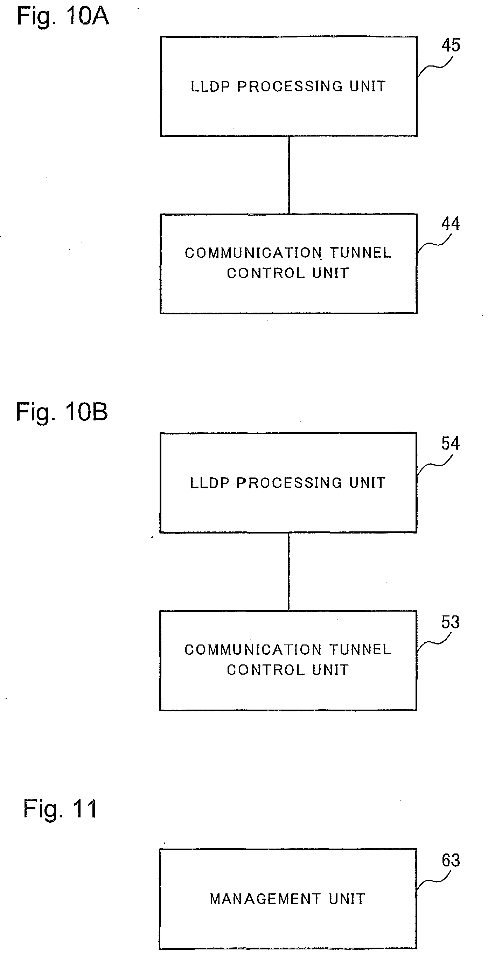

Fig. 10A is a figure showing the wireless base station composed of the communication tunnel control unit 44 and the LLDP processing unit 45. Fig. 10B is a figure showing the switch composed of the communication tunnel control unit 53 and the LLDP processing unit 54. Fig. 11 is a figure showing the BRM composed of the management unit 63.

In this exemplary embodiment, the first LLDP frame contains information indicating the communication state of the wireless base station eNB1.

Further, the second LLDP frame contains information indicating the communication state of the switch SW1.

For this reason, even when the node exists between the BRM 3 and the access-network device, the BRM 3 can obtain information indicating the communication state of the access-network device. Further, the BRM 3 can centrally manage the state management (the monitoring of the band usage amount and the monitoring of the failure) in an L2 network.

In the BRM 3, the storage unit 62 stores the information indicating the communication state of each access-network device. For this reason, the management unit 63 refers to the information stored in the storage unit 62 and thereby, can set traffic routing which is taking into consideration the whole access-network 1 and instruct each access network device to control the band.

Further, the management unit 63 performs centralized monitoring of the traffic status and the failure status in the access network at an L2 level using the LLDP function and thereby, can realize the effective utilization of the resource of the access network 1 and provide a stable service to an end user.

### (Second exemplary embodiment)

In the first exemplary embodiment, each access-network device transmits the information managed by the each access-network device to the BRM 3 via the communication tunnel. In contrast, in a second exemplary embodiment, the access-network device transmits the information managed by the each access-network device and the information managed by another access-network device that is adjacent to the each access-network device to the BRM 3 via the communication tunnel by using the LLDP frame.

The difference between the first exemplary embodiment and the second exemplary embodiment will be described below. The configuration of the entire communication system according to the second exemplary embodiment is the same as that of the first exemplary embodiment shown in Fig. 1.

In the second exemplary embodiment, the each access-network device (the wireless base station and the switch) transmits/receives the LLDP frame to/from the another access-network device that is adjacent to the each access-network device and acquires information indicating the communication state of the another access-network device.

Hereinafter, the another access-network device that is adjacent to the each access-network device is referred to as "adjacent device".

The LLDP frame transmitted/received between the access-network device and the adjacent device contains the information indicating the current state of the transmission source of the LLDP frame among three states: the normal state, the congestion state, and the failure state and the information of the band usage amount of the line between the node existing in the next hop of the transmission source and the transmission source as the communication state of the transmission source.

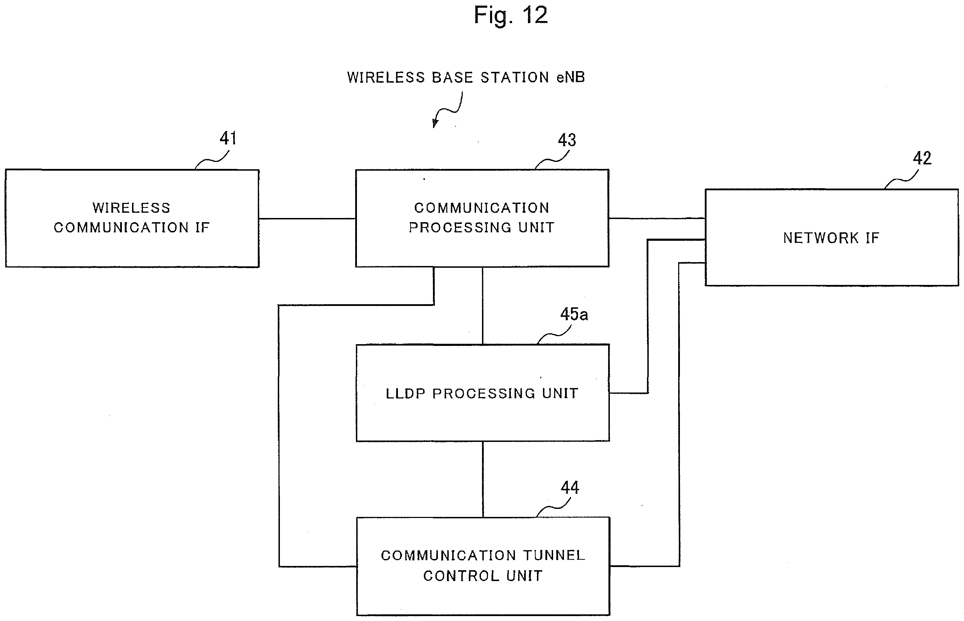

Fig. 12 is a figure showing a wireless base station eNB used in the second exemplary embodiment. In Fig. 12, the same reference numbers are used for the elements having the same function as the elements shown in Fig. 2.

In Fig. 12, the wireless base station eNB includes the wireless communication IF (interface) 41, the network IF 42, the communication processing unit 43, the communication tunnel control unit 44, and an LLDP processing unit 45a.

The LLDP processing unit 45a is an example of the communication unit.

The LLDP processing unit 45a transmits/receives the LLDP frame to/from the adjacent device. As described above, this LLDP frame contains the information indicating the current state of the transmission source of the LLDP frame among three states: the normal state, the congestion state, and the failure state and the information of the band usage amount of the line between the node existing in the next hop of the transmission source and the transmission source as the communication state of the transmission source.

The LLDP processing unit 45a manages the information indicating the communication state of the wireless base station eNB1 of which the communication processing unit 43 notifies the LLDP processing unit 45a and the information indicating the communication state of the adjacent device of which the adjacent device notifies the LLDP processing unit 45a.

The LLDP processing unit 45a generates a third LLDP frame that contains the information indicating the communication state and the identification information of the wireless base station eNB1 and the information indicating the communication state and the identification information of the adjacent device. The LLDP processing unit 45a refers to the first communication tunnel information, performs the encapsulation of the third LLDP frame for the first communication tunnel, and generates a packet for third notification. The LLDP processing unit 45a transmits the packet for third notification from the network IF 42.

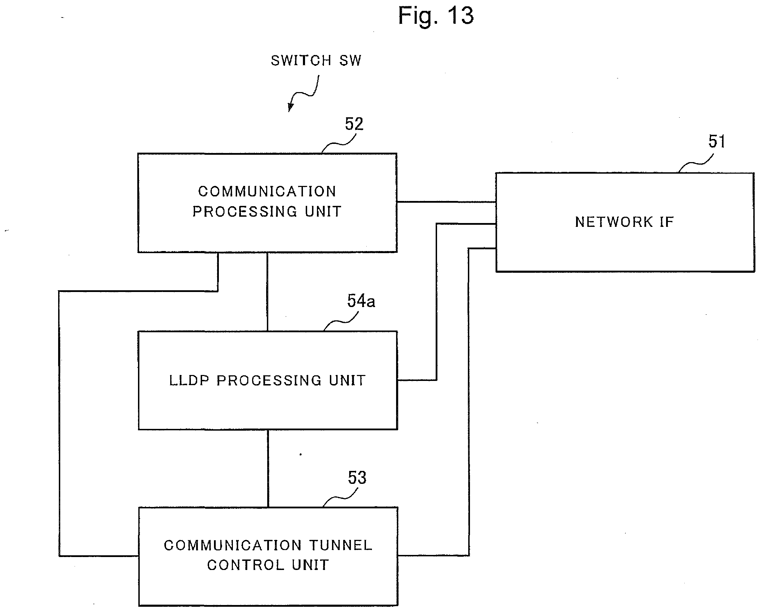

Fig. 13 is a figure showing a switch SW used in the second exemplary embodiment. In Fig. 13, the same reference numbers are used for the elements having the same function as the elements shown in Fig. 3.

In Fig. 13, the switch SW includes the network IF 51, the communication processing unit 52, the communication tunnel control unit 53, and an LLDP processing unit 54a.

The LLDP processing unit 54a is an example of the communication unit.

The LLDP processing unit 54a transmits/receives the LLDP frame to/from the adjacent device. As described above, this LLDP frame contains the information indicating the current state of the transmission source of the LLDP frame among three states: the normal state, the congestion state, and the failure state and the information of the band usage amount of the line between the node existing in the next hop of the transmission source and the transmission source as the communication state of the transmission source.

The LLDP processing unit 54a manages the information indicating the communication state of the switch SW of which the communication processing unit 52 notifies the LLDP processing unit 54a and the information indicating the communication state of the adjacent device of which the adjacent device notifies the LLDP processing unit 54a.

The LLDP processing unit 54a generates a fourth LLDP frame that contains the information indicating the communication state and the identification information of the switch SW and the information indicating the communication state and the identification information of the adjacent device. The LLDP processing unit 54a refers to the second communication tunnel information, performs the encapsulation of the fourth LLDP frame for the second communication tunnel, and generates a packet for fourth notification. The LLDP processing unit 54a transmits the packet for fourth notification from the network IF 51.

In the BRM 3, when the management unit 63 receives the packet for third notification or the packet for fourth notification (hereinafter, referred to as "notification packet") via the network IF 61, the management unit 63 performs the decapsulation of the notification packet and detects the LLDP frame.

The management unit 63 stores the information indicating the communication state of the transmission source of the LLDP frame, the identification information of the transmission source, the information indicating the communication state of the adjacent device, and the identification information of the adjacent device that are contained in the LLDP frame to the storage unit 62.

Next, the effect of this exemplary embodiment will be described.

The LLDP processing unit 45a generates the third LLDP frame that contains the information indicating the communication state of the wireless base station eNB and the information indicating the communication state of the adjacent device. The LLDP processing unit 45a transmits the third LLDP frame via the first communication tunnel.

For this reason, even when another node exists between the wireless base station eNB and the BRM 3, the third LLDP frame reaches the BRM 3.

Further, the LLDP processing unit 54a generates the fourth LLDP frame that contains the information indicating the communication state of the switch SW and the information indicating the communication state of the adjacent device. The LLDP processing unit 54a transmits the fourth LLDP frame via the second communication tunnel.

For this reason, even when another node exists between the switch SW and the BRM 3, the fourth LLDP frame reaches the BRM 3.

Accordingly, the BRM 3 can obtain the information managed by the access-network device of which another node exists between the BRM 3 and the access-network device from the LLDP frame.

Further, in each sub network in the access network 1, when at least one device among the access-network devices belonging to the sub network transmits the third or fourth LLDP frame, the BRM 3 can manage the communication state of the access network 1.

The following modification can be made to the above-mentioned each exemplary embodiment.

The access-network device does not calculate the band information (the band usage amount) and the BRM 3 calculates the band information. For example, information (IfInOctets and IfOutOctets) of a standard MIB (Management information base) of the access-network device is transmitted to the BRM 3 from the access-network device via the communication tunnel by the LLDP frame. The BRM 3 calculates the band information (the band usage amount) by using the information of the standard MIB. The standard MIB is specified in RFC (Request For Comment) 1213.

As another modification example, in a case in which the criteria required for the monitoring of the access network 1 is not high, the access-network device may not notify the BRM 3 of the band information (band usage amount) and the BRM 3 may not monitor the band information.

Further, the access-network device may manage the band usage amount of the data transmitted and received by a physical line or a logical line unit (a unit of VLAN or a unit of a virtual IP address) and transmit the LLDP frame containing the information of the band usage amount to the BRM 3 via the communication tunnel. In this case, the BRM 3 can monitor the band usage amount per the logical line. Therefore, the band usage amount can be precisely managed per VLAN, per service, or the like and the BRM 3 can precisely perform the control.

The management unit 63 holds a first threshold value for determining the congestion state and when the band usage amount of a certain line exceeds the first threshold value, the management unit 63 may determine that the line is in the congestion state.

Further, the management unit 63 holds a second threshold value for determining the release of the congestion state and when the band usage amount of the line to which it is determined that the line is in the congestion state decreases to the second threshold value, the management unit 63 may determine that the congestion state of the line is over. Further, the second threshold value is smaller than the first threshold value.

The management unit 63 holds a third threshold value for determining a quasi-congestion state in which the state of the line is approaching the congestion state and when the band usage amount of a certain line is greater than the third threshold value and smaller than the first threshold value, the management unit 63 may determine that the line is in the quasi-congestion state. Further, the third threshold value is smaller than the first threshold value and greater than the second threshold value.

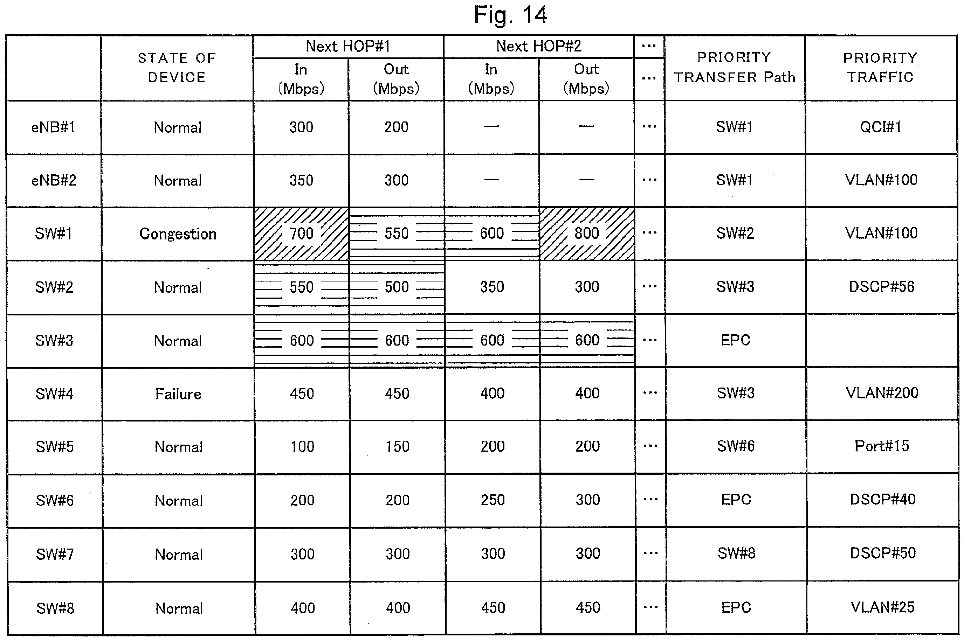

Fig. 14 is a figure showing an example of the storage unit 62 storing a result of the determination using the first to third threshold values. Here, the data speeds of 680 Mbps, 650 Mbps, and 480 Mbps are used as the first threshold value, the second threshold value, and the third threshold value, respectively. Further, the first to third threshold values are not limited to the values of 680 Mbps, 650 Mbps, and 480 Mbps, respectively and these values can be appropriately determined.

In Fig. 14, it is determined that the line shown with positive slope hatching is in the "congestion state". Further, in Fig. 14, it is determined that the line shown with horizontal line hatching is in the "quasi-congestion state".

In Fig. 14, a priority path (Path) and a priority traffic are stored in the storage unit 62 with respect to each of the access-network devices (the wireless base stations eNB1 to eNB2 and the switches SW1 to SW8). For example, the priority path (Path) and the priority traffic are set according to an instruction from an administrator terminal of the access network 1.

In a case in which the access-network device to which the priority path is set has a plurality of the paths, the priority path is preferentially used among a plurality of the paths for data transmission.

The priority traffic shows information such as priority service, VLAN, DSCP (Differentiated Services Code Point) or the like when the access-network device to which the priority traffic is set transmits the data.

For example, when the access-network device to which the priority traffic is set is in the congestion state, the management unit 63 transmits a band control instruction or a priority control instruction indicating that the traffic other than the priority traffic is lowered to the access-network device. When the access-network device receives the band control instruction or the priority control instruction, the access-network device controls the traffic according to the band control instruction or the priority control instruction.

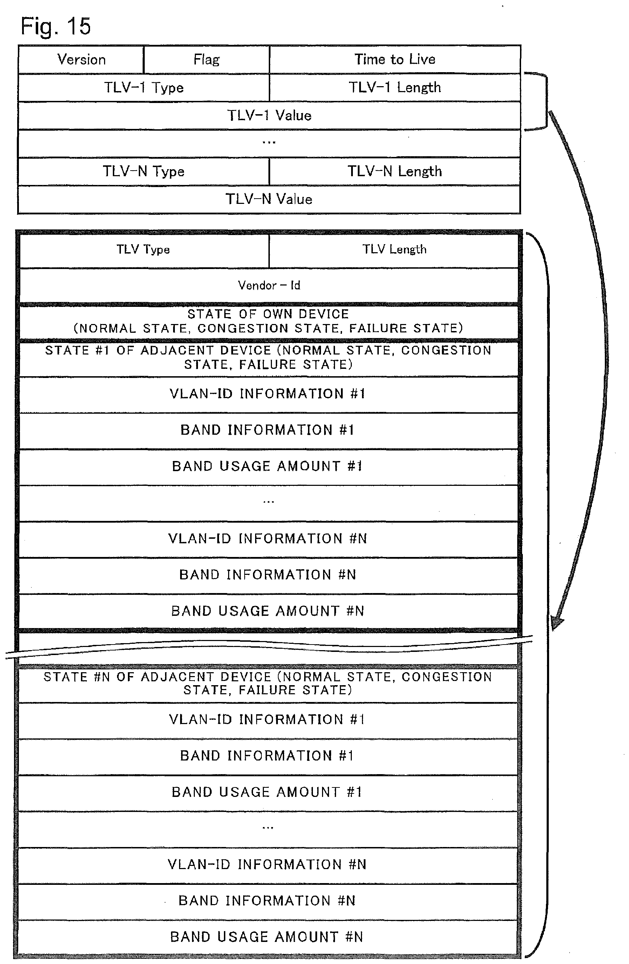

Fig. 15 is a figure showing an example of a format of the LLDP frame used in each exemplary embodiment or each modification example.

As shown in Fig. 15, a state of the own device and band information of the line between the own device and the adjacent device is newly set in Vendor Specific TLV (Type, Length, Value) of the LLDP.

Further, even when the expansion of the LLDP frame as shown in Fig. 15 is not performed, the management unit 63 can perform the predetermined traffic control based on the information which can be acquired from the existing standard MIB. Therefore, the above-mentioned each exemplary embodiment can be applied to the existing access network.

Further, the access network that is a monitoring target monitored by the BRM 3 is not limited to EUTRAN (Evolved Universal Terrestrial Radio Access Network) for LTE (Long Term Evolution). For example, the access network that is a monitoring target monitored by the BRM 3 may be UTRAN (Universal Terrestrial Radio Access Network) of 3GPP (3rd Generation Partnership Project). Further, the access network that is a monitoring target monitored by the BRM 3 may be GERAN (Enhanced Data Rates for GSM Radio Access Network) of GSM (Global System for Mobile Communications) (registered trademark). Further, the access network that is a monitoring target monitored by the BRM 3 may be the Internet. In this case, it is desirable that the wireless base station eNB can support Multiple RAT (Radio Access Technology) access network connection.

Further, in the above-mentioned each exemplary embodiment, the wireless base station eNB may be realized by using a computer. In this case, the computer reads a program recorded in a recording medium such as a computer-readable CD-ROM (Compact Disk Read Only Memory), executes it, and performs each function of the wireless base station eNB. The recording medium is not limited to the CD-ROM and another medium can be appropriately used.

Further, in the above-mentioned each exemplary embodiment, the switch SW may be realized by the computer.

In this case, the computer reads a program recorded in a computer-readable recording medium, executes it, and performs each function of the switch SW.

In each exemplary embodiment described above, the configuration shown in the figure is shown as an example. Therefore, the present invention is not limited to the configuration shown in the figure.

The invention of the present application has been described above with reference to the exemplary embodiment (and the example). However, various changes in the configuration or details of the invention of the present application that can be understood by those skilled in the art can be made without departing from the scope of the invention as set out in the appended claims.

This application claims priority from Japanese Patent Application No. 2013-236576 filed on November 15, 2013.

### [Reference signs List]

- 100: communication system
- 1: access network
- 2: EPC network
- 3: BRM (management device)
- 41: wireless communication IF
- 42: network IF
- 43: communication processing unit
- 44: communication tunnel control unit
- 45 and 45a: LLDP processing unit
- 51: network IF
- 52: communication processing unit
- 53: communication tunnel control unit
- 54 and 54a: LLDP processing unit
- 61: network IF
- 62: storage unit
- 63: management unit
- 10A to 10C: network
- eNB1 to eNB2: wireless base station
- SW1 to SW8: switch

## Claims

1. A management device (3) configured to manage an access network (1) comprising a plurality of access-network devices, the management device comprising:
communication means for receiving a layer 2 message from an access-network device installed in the access network (1) via a communication tunnel set between the management device (3) and the access-network device, the layer 2 message including information indicating a communication state including a band usage amount of a line between the access-network device and another access-network device existing in the next hop of the access-network device, the information being managed by the access-network device; and
management means (63) for setting traffic routing and instructing each access network device to control the band with reference to the communication state of the access-network device.

2. A communication system (100) including an access-network device of a plurality of access-network devices installed in an access network (1) and a management device (3) configured to manage the access network (1), wherein
the access-network device comprises:
control means for setting a communication tunnel between the management device (3) and the access-network device after the access-network device is installed in the access network (1);
communication processing means (43) for specifying a band usage amount of a line between the access-network device and another access-network device existing in the next hop of the access-network device; and
first communication means for transmitting a layer 2 message via the communication tunnel, the layer 2 message including information indicating a communication state including the band usage amount of the access network device, the information being managed by the access-network device, and
the management device (3) comprises:
second communication means for receiving the layer 2 message from the access-network device via the communication tunnel; and
management means (63) for setting traffic routing and instructing each access network device to control the band with reference to the communication state of the access-network device.

3. A management method performed by a management device (3) which manages an access network (1) comprising a plurality of access-network devices, the method comprising:
receiving a layer 2 message from an access-network device installed in the access network (1) via a communication tunnel set between the management device (3) and the access-network device, the layer 2 message including information indicating a communication state including a band usage amount of a line between the access-network device and another access-network device existing in the next hop of the access-network device, the information being managed by the access-network device; and
setting traffic routing and instructing each access-network device to control the band with reference to the communication state of the access-network device.

4. A program which causes a programmable management device to perform:
a reception procedure in which a layer 2 message is received from an access-network device installed in an access network (1) comprising a plurality of access-network devices via a communication tunnel set between the management device and the access-network device, the layer 2 message including information indicating a communication state including a band usage amount of a line between the access-network device and another access-network device existing in the next hop of the access-network device, the information being managed by the access network device; and
a management procedure in which traffic routing is set and each access-network device is instructed to control the band with reference to the communication state of the access-network device.

5. A management method performed in a communication system (100) including an access-network device of a plurality of access-network devices installed in an access network (1) and a management device (3) which manages the access network (1), comprising:
setting a communication tunnel between the management device (3) and the access-network device after the access-network device is installed in the access network (1);
specifying a band usage amount of a line between the access-network device and another access-network device existing in the next hop of the access-network device;
transmitting a layer 2 message via the communication tunnel, the layer 2 message including information indicating a communication state including the band usage amount of the access network device, the information being managed by the access-network device;
receiving the layer 2 message from the access-network device via the communication tunnel; and
setting traffic routing and instructing each access network device to control the band with reference to the communication state of the access-network device.

## Patentansprüche

1. Managementvorrichtung (3), die dafür konfiguriert ist, ein Zugangsnetzwerk (1) mit mehreren Zugangsnetzwerkeinrichtungen zu managen, wobei die Managementvorrichtung aufweist:
eine Kommunikationseinrichtung zum Empfangen einer Layer-2-Nachricht von einer im Zugangsnetzwerk (1) installierten Zugangsnetzwerkeinrichtung über einen Kommunikationstunnel, der zwischen der Managementvorrichtung (3) und der Zugangsnetzwerkeinrichtung eingerichtet ist, wobei die Layer-2-Nachricht Information enthält, die einen Kommunikationszustand anzeigt, der einen Bandnutzungsgrad einer Leitung zwischen der Zugangsnetzwerkeinrichtung und einer anderen Zugangsnetzwerkeinrichtung aufweist, die im nächsten Hop der Zugangsnetzwerkeinrichtung vorhanden ist, wobei die Information durch die Zugangsnetzwerkeinrichtung gemanagt wird; und
eine Managementeinrichtung (63) zum Einstellen eines Verkehrsroutings und zum Anweisen jeder Zugangsnetzwerkeinrichtung, das Band unter Bezug auf den Kommunikationszustand der Zugangsnetzwerkeinrichtung zu steuern.

2. Kommunikationssystem (100) mit einer Zugangsnetzwerkeinrichtung unter mehreren Zugangsnetzwerkeinrichtungen, die in einem Zugangsnetzwerk (1) installiert sind, und mit einer Managementvorrichtung (3), die dafür konfiguriert ist, das Zugangsnetzwerk (1) zu managen, wobei die Zugangsnetzwerkeinrichtung aufweist:
eine Steuereinrichtung zum Einrichten eines Kommunikationstunnels zwischen der Managementvorrichtung (3) und der Zugangsnetzwerkeinrichtung, nachdem die Zugangsnetzwerkeinrichtung im Zugangsnetzwerk (1) installiert ist;
eine Kommunikationsverarbeitungseinrichtung (43) zum Spezifizieren eines Bandnutzungsgrades einer Leitung zwischen der Zugangsnetzwerkeinrichtung und einer anderen Zugangsnetzwerkeinrichtung, die im nächsten Hop der Zugangsnetzwerkeinrichtung vorhanden ist; und
eine erste Kommunikationseinrichtung zum Übertragen einer Layer-2-Nachricht über den Kommunikationstunnel, wobei die Layer-2-Nachricht Information enthält, die einen Kommunikationszustand anzeigt, der den Bandnutzungsgrad der Zugangsnetzwerkeinrichtung aufweist, wobei die Information durch die Zugangsnetzwerkeinrichtung gemanagt wird, und
wobei die Managementvorrichtung (3) aufweist:
eine zweite Kommunikationseinrichtung zum Empfangen der Layer 2-Nachricht von der Zugangsnetzwerkeinrichtung über den Kommunikationstunnel; und
eine Managementeinrichtung (63) zum Einstellen eines Verkehrsroutings und zum Anweisen jeder Zugangsnetzwerkeinrichtung, das Band unter Bezug auf den Kommunikationszustand der Zugangsnetzwerkeinrichtung zu steuern.

3. Managementverfahren, das durch eine Managementvorrichtung (3) ausgeführt wird, die ein Zugangsnetzwerk (1) managt, das mehrere Zugangsnetzwerkeinrichtungen aufweist, wobei das Verfahren die Schritte aufweist:
Empfangen einer Layer-2-Nachricht von einer Zugangsnetzwerkeinrichtung, die im Zugangsnetzwerk (1) installiert ist, über einen Kommunikationstunnel, der zwischen der Managementvorrichtung (3) und der Zugangsnetzwerkeinrichtung eingerichtet ist, wobei die Layer-2-Nachricht Information enthält, die einen Kommunikationszustand anzeigt, der einen Bandnutzungsgrad einer Leitung zwischen der Zugangsnetzwerkeinrichtung und einer anderen Zugangsnetzwerkeinrichtung aufweist, die im nächsten Hop der Zugangsnetzwerkeinrichtung vorhanden ist, wobei die Information durch die Zugangsnetzwerkeinrichtung gemanagt wird; und
Einstellen eines Verkehrsroutings und Anweisen jeder Zugangsnetzwerkeinrichtung, das Band unter Bezug auf den Kommunikationszustand der Zugangsnetzwerkeinrichtung zu steuern.

4. Programm, das eine programmierbare Managementvorrichtung veranlasst, auszuführen:
eine Empfangsprozedur, in der eine Layer-2-Nachricht von einer Zugangsnetzwerkeinrichtung, die in einem Zugangsnetzwerk (1) installiert ist, das mehrere Zugangsnetzwerkeinrichtungen aufweist, über einen Kommunikationstunnel empfangen wird, der zwischen der Managementvorrichtung und der Zugangsnetzwerkeinrichtung eingerichtet ist, wobei die Layer-2-Nachricht Information enthält, die einen Kommunikationszustand anzeigt, der einen Bandnutzungsgrad einer Leitung zwischen der Zugangsnetzwerkeinrichtung und einer anderen Zugangsnetzwerkeinrichtung aufweist, die im nächsten Hop der Zugangsnetzwerkeinrichtung vorhanden ist, wobei die Information durch die Zugangsnetzwerkeinrichtung verwaltet wird; und
eine Managementprozedur, in der ein Verkehrsrouting eingestellt wird und jede Zugangsnetzwerkeinrichtung angewiesen wird, das Band unter Bezug auf den Kommunikationszustand der Zugangsnetzwerkeinrichtung zu steuern.

5. Managementverfahren, das in einem Kommunikationssystem (100) ausgeführt wird, das eine Zugangsnetzwerkeinrichtung unter mehreren Zugangsnetzwerkeinrichtungen, die in einem Zugangsnetzwerk (1) installiert sind, und eine Managementvorrichtung (3) aufweist, die das Zugangsnetzwerk (1) managt, mit den Schritten zum:
Einrichten eines Kommunikationstunnels zwischen der Managementvorrichtung (3) und der Zugangsnetzwerkeinrichtung, nachdem die Zugangsnetzwerkeinrichtung im Zugangsnetzwerk (1) installiert ist;
Spezifizieren eines Bandnutzungsgrades einer Leitung zwischen der Zugangsnetzwerkeinrichtung und einer anderen Zugangsnetzwerkeinrichtung, die im nächsten Hop der Zugangsnetzwerkeinrichtung vorhanden ist;
Übertragen einer Layer-2-Nachricht über den Kommunikationstunnel, wobei die Layer-2-Nachricht Information enthält, die einen Kommunikationszustand anzeigt, der den Bandnutzungsgrad der Zugangsnetzwerkeinrichtung aufweist, wobei die Information durch die Zugangsnetzwerkeinrichtung gemanagt wird;
Empfangen der Layer-2-Nachricht von der Zugangsnetzwerkeinrichtung über den Kommunikationstunnel; und
Einstellen eines Verkehrsroutings und Anweisen jeder Zugangsnetzwerkeinrichtung, das Band unter Bezug auf den Kommunikationszustand der Zugangsnetzwerkeinrichtung zu steuern.

## Revendications

1. Dispositif de gestion (3) configuré pour gérer un réseau d'accès (1) comprenant une pluralité de dispositifs de réseau d'accès, le dispositif de gestion comprenant :
des moyens de communication pour recevoir un message de couche 2 à partir d'un dispositif de réseau d'accès installé dans le réseau d'accès (1) via un tunnel de communication établi entre le dispositif de gestion (3) et le dispositif de réseau d'accès, le message de couche 2 incluant des informations indiquant un état de communication incluant une quantité d'utilisation de bande d'une ligne entre le dispositif de réseau d'accès et un autre dispositif de réseau d'accès existant dans le saut suivant du dispositif de réseau d'accès, les informations étant gérées par le dispositif de réseau d'accès ; et
des moyens de gestion (63) pour régler un routage de trafic et donner instruction à chaque dispositif de réseau d'accès pour commander la bande en référence à l'état de communication du dispositif de réseau d'accès.

2. Système de communication (100) comprenant un dispositif de réseau d'accès d'une pluralité de dispositifs de réseau d'accès installés dans un réseau d'accès (1) et un dispositif de gestion (3) configuré pour gérer le réseau d'accès (1), dans lequel
le dispositif de réseau d'accès comprend :
des moyens de commande pour établir un tunnel de communication entre le dispositif de gestion (3) et le dispositif de réseau d'accès, après que le dispositif de réseau d'accès est installé dans le réseau d'accès (1) ;
des moyens de traitement de communication (43) pour spécifier une quantité d'utilisation de bande d'une ligne entre le dispositif de réseau d'accès et un autre dispositif de réseau d'accès existant dans le saut suivant du dispositif de réseau d'accès ; et
des premiers moyens de communication pour transmettre un message de couche 2 via le tunnel de communication, le message de couche 2 incluant des informations indiquant un état de communication incluant la quantité d'utilisation de bande du dispositif de réseau d'accès, les informations étant gérées par le dispositif de réseau d'accès, et
le dispositif de gestion (3) comprend :
des seconds moyens de communication pour recevoir le message de couche 2 à partir du dispositif de réseau d'accès via le tunnel de communication ; et
des moyens de gestion (63) pour régler un routage de trafic et donner instruction à chaque dispositif de réseau d'accès pour commander la bande en référence à l'état de communication du dispositif de réseau d'accès.

3. Procédé de gestion réalisé par un dispositif de gestion (3) qui gère un réseau d'accès (1) comprenant une pluralité de dispositifs de réseau d'accès, le procédé comprenant :
la réception d'un message de couche 2 à partir d'un dispositif de réseau d'accès installé dans le réseau d'accès (1) via un tunnel de communication établi entre le dispositif de gestion (3) et le dispositif de réseau d'accès, le message de couche 2 incluant des informations indiquant un état de communication incluant une quantité d'utilisation de bande d'une ligne entre le dispositif de réseau d'accès et un autre dispositif de réseau d'accès existant dans le saut suivant du dispositif de réseau d'accès, les informations étant gérées par le dispositif de réseau d'accès ; et
le réglage d'un routage de trafic et l'envoi d'instructions à chaque dispositif de réseau d'accès pour commander la bande en référence à l'état de communication du dispositif de réseau d'accès.

4. Programme qui amène un dispositif de gestion programmable à réaliser :
une procédure de réception dans laquelle un message de couche 2 est reçu à partir d'un dispositif de réseau d'accès installé dans un réseau d'accès (1) comprenant une pluralité de dispositifs de réseau d'accès via un tunnel de communication établi entre le dispositif de gestion et le dispositif de réseau d'accès, le message de couche 2 incluant des informations indiquant un état de communication incluant une quantité d'utilisation de bande d'une ligne entre le dispositif de réseau d'accès et un autre dispositif de réseau d'accès existant dans le saut suivant du dispositif de réseau d'accès, les informations étant gérées par le dispositif de réseau d'accès ; et
une procédure de gestion dans laquelle un routage de trafic est réglé et chaque dispositif de réseau d'accès reçoit instruction de commander la bande en référence à l'état de communication du dispositif de réseau d'accès.

5. Procédé de gestion réalisé dans un système de communication (100) comprenant un dispositif de réseau d'accès d'une pluralité de dispositifs de réseau d'accès installés dans un réseau d'accès (1) et un dispositif de gestion (3) qui gère le réseau d'accès (1), comprenant :
l'établissement d'un tunnel de communication entre le dispositif de gestion (3) et le dispositif de réseau d'accès, après que le dispositif de réseau d'accès est installé dans le réseau d'accès (1) ;
la spécification d'une quantité d'utilisation de bande d'une ligne entre le dispositif de réseau d'accès et un autre dispositif de réseau d'accès existant dans le saut suivant du dispositif de réseau d'accès ;
la transmission d'un message de couche 2 via le tunnel de communication, le message de couche 2 incluant des informations indiquant un état de communication incluant la quantité d'utilisation de bande du dispositif de réseau d'accès, les informations étant gérées par le dispositif de réseau d'accès ; et
la réception du message de couche 2 à partir du dispositif de réseau d'accès via le tunnel de communication ; et
le réglage d'un routage de trafic et l'envoi d'instructions à chaque dispositif de réseau d'accès pour commander la bande en référence à l'état de communication du dispositif de réseau d'accès.
